# EUROPÄISCHE PATENTSCHRIFT

(11) **EP 0 691 493 B1**
(45) Veröffentlichungstag und Bekanntmachung des Hinweises auf die Patenterteilung: **10.03.1999**
(21) Anmeldenummer: 95250162.5
(22) Anmeldetag: 05.07.1995
(51) Int. Cl.: F16K 7/06, F16K 11/02

(54) **Schlauchventil**
Tubular diaphragm valve
Robinet à membrane tubulaire

(30) Priorität: 06.07.1994 DE 4425599
(43) Veröffentlichungstag der Anmeldung: 10.01.1996
(73) Patentinhaber: MANNESMANN Aktiengesellschaft, 40213 Düsseldorf (DE)
(72) Erfinder: Möller, Rudolf, D-30989 Gehrden (DE)
(74) Vertreter: Presting, Hans-Joachim, Dipl.-Ing.

(56) Entgegenhaltungen:
- CH-A- 471 035
- DE-B- 2 039 306
- GB-A- 1 012 565
- US-A- 2 556 689

## Beschreibung

Die Erfindung betrifft ein Schlauchventil mit einem ein zu schaltendes Fluidum umgebenden Schlauchelement, gemäß Oberbegriff des Patentanspruches 1.

Durch das Dokument GB-A-1 012 565 ist ein gattungsgemäßes Schlauchventil bekannt, bei dem das Prinzip der Knickung des Schlauchs verwirklicht ist.

Schlauchventile laufen auch unter der Bezeichnung "Ventile mit Schlauchklemme". Ein solches Ventil ist u. a. aus Datenblättern der Firma Sirai bekannt. Bei diesem Schlauchventil handelt es sich um einen über einen Elektromagneten betätigten Stempel, welcher das eingespannte Schlauchelement zusammenquetscht. Je nach Ausführung sind diese Ventile als Zwei- oder Drei-Wege-Ventile bekannt. Nachteilig ist hierbei, daß das Schalten des Fluldstromes über ein direktes radiales Zusamenquetschen des Schlauchelementes erfolgt- Hierzu müssen erhebliche mechanische Kräfte aufgebracht werden und somit ist das Betätigungsmittel entsprechend auszulegen.

Es ergibt sich somit, daß, wenn die Kräfte nicht groß genug sind, keine genügende Dichtigkeit erreicht werden kann. In die aufzubringenden Kräfte geht natürlich auch die durch den Druck des Fluidums erzeugte Steifigkeit des Schlauchelementes mit ein. Dies hat dann einen Einfluß auf die notwendigen Betätigungskräfte oder auf die erreichte Dichtigkeit.

Der Erfindung liegt daher die Aufgabe zugrunde, ein Schlauchventil der gattungsgemäßen Art dahingehend weiterzubilden, daß mit relativ kleinen Kräften zuverlässig geschaltet werden kann.

Bei einem Schlauchventil der gattungsgemäßen Art wird die gestellte Aufgabe erfindungsgemäß mit den im Kennzeichen des Patentanspruchs 1 angegebenen Merkmalen gelöst.

Weitere vorteilhafte Ausgestaltungen der Erfindung sind in den Unteransprüchen angegeben.

Dadurch, daß das Schlauchelement im Schaltabschnitt geknickt wird und der Knickwinkel über die Betätigungswinkel variierbar ist, kann zum einen mit relativ kleinen Kräften geschaltet werden und zum anderen eine enorme Dichtigkeit bei nur kleinen Betätigungskräften erreicht werden. Hinzu kommt, daß das gesamte Schlauchventil kompakt und einfach aufgebaut ist. Das Ventil hat somit den weiteren Vorteil, daß es relativ störunanfällig ist, da keine bewegten Ventilglieder mehr vorhanden sind.

Die Betätigungselemente bestehen aus einem mechanischen Wippschalter und einem damit mechanisch gekoppelten Neigungselement. Dieses Neigungselement greift dabei auf das Schlauchelement in einem Abschnitt ein, in dem es die zuvor montierte Knickung des Schlauchelementes in der vorgegebenen Weise beeinflussen kann. Durch den mechanischen Wippschalter ergibt sich, daß mit nur sehr kleinen mechanischen Betätigungskräften, selbst bei hohem Druck des Fluidums und bei hoher Dichtungsanforderung, geschaltet werden kann.

Die Erfindung ist in der Zeichnung dargestellt und im nachfolgenden näher beschrieben.

Es zeigt:
- Figur 1: Seitenansicht des Ventiles mit der Führung des Schlauchelementes.
- Figur 2: Schlauchelement in einer betätigten Stellung.

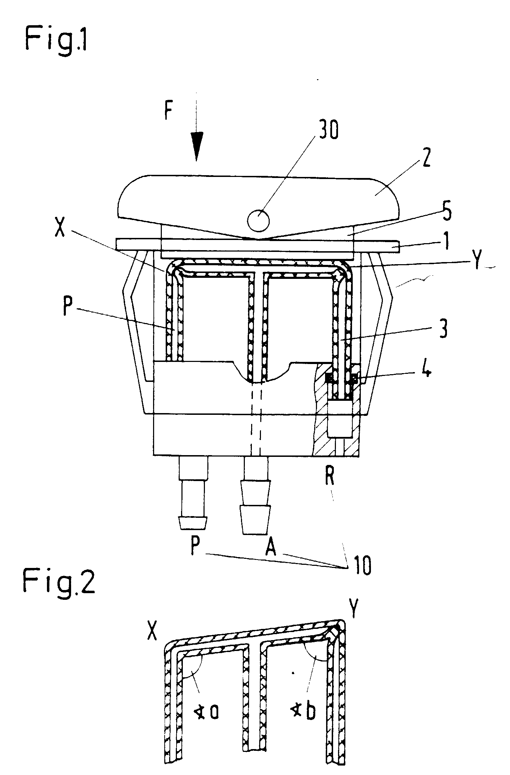

Figur 1 zeigt das Ventil in Seitenansicht mit Einblick in das Innenleben desselben. Innerhalb eines Gehäuses oder eines Trag- oder Befestigungsrahmens 1 ist das Schlauchelement 3 angeordnet. Das Schlauchelement 3 ist dabei funktionsmäßig sowohl Druckmittelleitungssystem als auch Schaltelement. Hier spiegelt sich somit das Wesen der Erfindung wider, da kein separates Ventilglied, welches im Druckmittelweg angeordnet ist, benötigt wird. Das Schlauchelement 3 ist über zwei rechte Winkel geführt, die in Figur 2 noch näher dargestellt sind. Dadurch entsteht eine Knicklage, die zu einer Verengung bzw. Abdichtung des Schlauchelementes in diesem Bereich führt. In diesem Ausführungsbeispiel weist das Schlauchelement 3 auch noch einen mittleren Abgang auf, um eine 3/3-Wegeventilfunktion zu bewerkstelligen. Die Schlauchansätze des Schlauchelementes 3 münden in die Druckmittelanschlüsse 10, welche mit P, A und R bezeichnet sind. An den Stellen, an denen das Schlauchelement in den jeweiligen Druckmittelanschluß 10 einmündet, ist eine Ringdichtung 4 vorgesehen, die die notwendige Dichtigkeit erreicht und zudem das Schlauchelement sicher festhält. Am Gehäuserahmen (1) ist außen ein Wippschalter 2 angeordnet. Dieser Wippschalter betätigt dabei eine Wippe 5, die mechanisch direkt auf das Schlauchelement 3 eingreift. Das Schlauchelement 3 verläuft dabei über einen Abschnitt zwischen den Punkten X und Y parallel zu diesem Neigungselement 5. Dieses Neigungselement 5 greift dabei nicht mehr, wie bei bekannten Schlauchventilen, durch Quetschung des Schlauchelementes auf dasselbe ein, sondern gemäß seiner Bezeichnung wird das Schlauchelement zwischen den Punkten X und Y nunmehr nur noch geneigt. Die Neigung bewirkt dabei an den Knickstellen im Bereich der Punkte X und Y eine Veränderung des Querschnittes des Schlauchelementes.

Eine beispielhafte Betätigungsposition ist in Figur 2 dargestellt. Über das Neigungselement 5 durch Betätigung des Kippschalters 2 ist das Schlauchelement zwischen den Punkten X und Y in der dargestellten Weise geneigt. Der Winkel a ist dabei um den Betrag Δ a größer geworden als 90 Grad bezogen auf die Ruheposition, und der Winkel b ist um einen Betrag minus Δ a = Δ b , kleiner als 90 Grad geworden. Dies führt dazu, daß im Bereich des Punktes Y das Schlauchelement durch die dargestellte Knickung gänzlich abdichtet und im Bereich des Punktes X ein Durchgang von Druckmittel möglich ist. Bei einem Einbau des Schlauchelementes gemäß Figur 1 entsteht dabei in dieser betätigten Stellung die Funktion, daß die Druckmittelversorgungsleitung P in die Arbeitsleitung A durchgeschaltet ist und die Entlüftungsleitung R geschlossen ist.

Insgesamt ist das Ventil einfach ausgestaltet und zudem außerordentlich zuverlässig. Nachdem geeignetes Schlauchmaterial eingesetzt ist, ist die Reproduktivität der Ventilfunktion kein Problem mehr und dieses Ventil kann unter Beibehaltung konstanter Betriebseigenschaften in großserie gefertigt werden.

## Patentansprüche

1. Schlauchventil mit einem ein zu schaltendes Fluidum umgebenden Schlauchelement (3), bei welchem über Betätigungselemente (2,5) das Schlauchelement (3) im Querschnitt zur Beeinflussung oder zum Schalten des Fluidumflusses veränderbar ist,
dadurch gekennzeichnet, daß
- das Schlauchelement (3) im unbetätigten Zustand an zwei Stellen X,Y im oder am Ventil um jeweils einen definierten Winkel a=b=90° geführt ist, bei welchem ein von O verschiedener Durchfluß D1 durch das Schlauchelement (3) gewährleistet ist,
- die Betätigungselemente (2,5), die im wesentlichen aus einem mechanischen Wippschalter (2) und einem Neigungselement (5) bestehen, zwischen den beiden Stellen X und Y auf das Schlauchelement (3) eingreifen, d.h. daß Bei Betätigung des Wippschalters (2) das Schlauchelement (3) im Abschnitt zwischen den Stellen X und Y neigbar ist und zwar derart, das die Schlauchführung im Bereich des Winkels a entweder um einen Betrag +Δa oder -Δa und gleichzeitig im Bereich des Winkels b entweder um einen Betrag -Δb oder +Δb verändert wird, sodaß in mindestens einer dieser beiden betätigbaren Stellungen an einer der beiden Stellen X oder Y der Durchfluß D1 durch das Schlauchelement (3) gleich O ist.

2. Schlauchventil nach Anspruch 1, dadurch gekennzeichnet,
daß zwischen den Stellen X und Y am Schlauchelement (3) ein weiterer Schlauchabgang (A) vorgesehen ist.

3. Schlauchventil nach Anspruch 2, dadurch gekennzeichnet,
daß an den Enden des Schlauchelementes (3) und an dem weiteren Schlauchabgang zumindest teilweise Druckmittelanschlüsse (10) vorgesehen sind.

4. Schlauchventil nach Anspruch 3, dadurch gekennzeichnet,
daß das über den Wippschalter (2) betätigbare Neigungselement (5) derart angeordnet ist, daß der Drehpunkt (30) des Neigungselementes zwischen den Stellen X und Y in der Höhe des weiteren Schlauchabganges liegt.

5. Schlauchventil nach Anspruch 2 oder 3, dadurch gekennzeichnet,
daß das Schlauchelement (3) sowie der weitere Schlauchabgang innerhalb eines Ventilrahmens oder Ventilgehäuses (1) angeordnet ist, und daß die Schlauchanschlüsse (10) an einer Seite des Rahmens oder des Gehäuses angeordnet bzw. nach außen tretend sind.

## Claims

1. Hose valve with a hose element (3) surrounding a fluid which is to be switched, in which activation elements (2, 5) are used to alter the cross-section of the hose element (3) so as to affect or switch the fluid flow,
**characterized in that**
- in the unactivated condition the hose element (3) is bent through a defined angle a = b = 90E at each of two points X, Y in or on the valve, at which a through-flow D1 other than zero through the hose element (3) is ensured,
- the activation elements (2, 5), which consist essentially of a mechanical rocker switch (2) and a tilting element (5), act on the hose element (3) between the two points X and Y, i.e. when the rocker switch (2) is activated, the hose element (3) in the section between the points X and Y can be tilted so that the bend of the hose in the area of the angle a is changed by an amount either +Δa or -Δa and at the same time, in the area of the angle b, it is changed by an amount either -Δb or +Δb, such that in at least one of these two activation positions the flow D1 through the hose element (3) at one of the two points X or Y is equal to zero.

2. Hose valve according to Claim 1,
**characterized in that**
between the points X and Y on the hose element (3), a further hose outlet (A) is provided.

3. Hose valve according to Claim 2,
**characterized in that**
at the ends of the hose element (3) and on the said further hose outlet, pressure medium connections (10) are provided at least in some cases.

4. Hose valve according to Claim 3,
**characterized in that**
the tilting element (5) that can be activated by the rocker switch (2) is positioned so that its pivot point (30) is between the points X and Y at the level of the further hose outlet.

5. Hose valve according to Claims 2 or 3,
**characterized in that**
the hose element (3) and the further hose outlet are arranged inside a valve frame or valve housing (1), and the hose connections (10) are positioned and emerge on one side of the said frame or housing.

## Revendications

1. Valve pour tuyau, comportant un élément de tuyau (3) entourant un fluide à commuter, dans laquelle la section transversale de l'élément de tuyau (3) peut être modifiée, par l'intermédiaire d'éléments d'actionnement (2,5), pour influencer ou pour commuter le flux de fluide,
caractérisée en ce que :
- l'élément de tuyau (3), dans l'état non actionné, est guidé en deux positions X, Y dans ou sur la valve sous un angle à chaque fois défini a = b = 90°, dans lequel un débit D1 différent de zéro est garanti à travers l'élément de tuyau (3),
- les éléments d'actionnement (2,5), qui sont constitués essentiellement d'un commutateur à bascule mécanique (2) et d'un élément d'inclinaison (5), s'engagent entre les deux positions X et Y sur l'élément de tuyau (3), c'est-à-dire que, lors de l'actionnement du commutateur à bascule (2), l'élément de tuyau (3) peut être incliné dans le tronçon entre les positions X et Y et, en vérité, de sorte que le guidage du tuyau est modifié dans la zone de l'angle A soit d'une valeur +Δa ou -Δa et, simultanément, dans la zone de l'angle b soit d'une valeur -Δb ou +Δb, de sorte que, dans au moins une de ces deux positions actionnables, le débit D1 à travers l'élément de tuyau (3) est égal à zéro en une des deux positions X ou Y.

2. Valve pour tuyau selon la revendication 1,
caractérisée en ce que, entre les positions X et Y, il est prévu sur l'élément de tuyau (3) une autre sortie du tuyau (A).

3. Valve pour tuyau selon la revendication 2,
caractérisée en ce que, aux extrémités de l'élément de tuyau (3) et à l'autre sortie du tuyau, sont prévus des raccords (10) de fluide sous pression au moins partiels.

4. Valve pour tuyau selon la revendication 3,
caractérisée en ce que l'élément d'inclinaison (5) actionnable par l'intermédiaire du commutateur à bascule (2) est agencé de sorte que le pivot (30) de l'élément d'inclinaison se trouve entre les positions X et Y à la hauteur de l'autre sortie du tuyau.

5. Valve pour tuyau selon la revendication 2 ou 3,
caractérisée en ce que l'élément de tuyau (3), ainsi que l'autre sortie du tuyau, sont agencés à l'intérieur d'un bâti ou boîtier de valve (1), et en ce que les raccords de tuyau (10) sont agencés sur un côté du bâti ou du boîtier ou orientés vers l'extérieur.
